# EUROPÄISCHE PATENTANMELDUNG

(11) **EP 3 800 388 A1**
(43) Veröffentlichungstag der Anmeldung: **07.04.2021**
(21) Anmeldenummer: 20197428.4
(22) Anmeldetag: 22.09.2020
(51) Int. Cl.: F16L 21/00, F16L 3/10

(54) **KANALVERBINDER UND LUFTFÜHRUNGSKANAL**

(30) Priorität: 01.10.2019 EP 19290100
(71) Anmelder: BSH Hausgeräte GmbH, 81739 München (DE)
(72) Erfinder: Chartrel, Aurélien, 67380 Lingolsheim (FR); Angelo, Laetitia, 67300 Schiltigheim (FR); Laurent, Guillaume, 67870 Bischoffsheim (FR); Flesch, Sebastien, 67150 Gerstheim (FR); Leblanc, Léa, 67200 Strasbourg (FR)

(57) **Zusammenfassung**

Die vorliegende Erfindung betrifft einen Kanalverbinder (1) zum Verbinden zweier Kanalelemente (90) eines Luftführungskanals (9), wobei der Kanalverbinder (1) dadurch gekennzeichnet, dass der Kanalverbinder (1) eine Hülle darstellt, die zumindest ein Zusatzelement (3, 5, 6, 8) zum Ausführen einer Zusatzfunktion aufweist. Zudem betrifft die Erfindung einen Luftführungskanal, der zumindest zwei Kanalelemente (90) aufweist, dadurch gekennzeichnet, dass der Luftführungskanal (9) zumindest einen Kanalverbinder (1) nach einem der Ansprüche 1 bis 10 aufweist und zwei Kanalelemente (90) über einen der Kanalverbinder (1) verbunden sind.

## Beschreibung

Die vorliegende Erfindung betrifft einen Kanalverbinder und einen Luftführungskanal mit zumindest einem Kanalverbinder.

Zur Reinigung von verunreinigter Luft, insbesondere von Küchendünsten und Wrasen sind Dunstabzugsvorrichtungen bekannt. Insbesondere sind Dunstabzugsvorrichtungen bekannt, die in oder neben einem Kochfeld installiert werden und die die verunreinigte Luft damit nach unten in die Dunstabzugsvorrichtung einsaugen. Diese Art von Dunstabzugsvorrichtung kann auch als Muldenlüfter oder Downdraft-Abzug bezeichnet werden. Vorzugsweise ist die Dunstabzugsvorrichtung mit dem Kochfeld integriert. Eine mit dem Kochfeld integrierte Dunstabzugsvorrichtung wird auch als Venting Cooktop bezeichnet.

Die verunreinigte Luft wird in der Dunstabzugsvorrichtung, die auch als Dunstabzugsmodul bezeichnet werden kann, durch Filter von den Verunreinigungen befreit. Die so erzeugte Reinluft wird entweder in den Raum, in dem das Kochfeld mit der Dunstabzugsvorrichtung betrieben wird, insbesondere die Küche zurückgeleitet. In diesem Fall wird die Dunstabzugsvorrichtung im Umluftbetrieb betrieben. Alternativ kann die Reinluft an die Umgebung, das heißt nach außen abgegeben werden. In diesem Fall wird die Dunstabzugsvorrichtung im Abluftbetrieb betrieben. Insbesondere für den Abluftbetrieb aber auch für den Umluftbetrieb, ist ein Luftführungskanal vorgesehen. Der Luftführungskanal besteht heutzutage in der Regel aus mehreren Teilen, die über eine Stecker-Buchse-Verbindung, die auch als männlich-weiblich-Verbindung oder Male-Female-Verbindung bezeichnet werden kann, miteinander verbunden sind. Der Luftführungskanal liegt insbesondere bei einem Abluftgerät in der Regel hinter dem Kochfeld und der Dunstabzugsvorrichtung, die in einem Küchenmöbel eingebracht sind.

Ein Nachteil, der bei diesen bekannten Luftführungskanälen besteht, ist, dass die Verbindungsstelle aufgrund ihrer Position in einem Küchenmöbel schwer zugänglich und gegebenenfalls nicht einsehbar ist und somit die Montage des Luftführungskanals erschwert ist.

Aufgabe der vorliegenden Erfindung ist es daher eine Lösung zu schaffen, mittels derer ein Luftführungskanal auf einfache Weise hergestellt und montiert werden kann.

Gemäß einem ersten Aspekt betrifft die Erfindung daher einen Kanalverbinder zum Verbinden zweier Kanalelemente eines Luftführungskanals. Der Kanalverbinder ist dadurch gekennzeichnet, dass der Kanalverbinder eine Hülle darstellt, die zumindest ein Zusatzelement zum Ausführen einer Zusatzfunktion aufweist.

Der Kanalverbinder wird im Folgenden auch als Hülle oder Ärmel bezeichnet. Die Hülle stellt somit einen Rahmen dar, der aus einer Wandung besteht, die den Querschnitt, durch den die Luft strömen kann, umgibt. Als Hülle oder Ärmel wird insbesondere ein Bauteil bezeichnet, das einen offenen Querschnitt aufweist, der sich zwischen den offenen Enden des Bauteils erstreckt. Zumindest an den beiden gegenüberliegenden Öffnungen des Bauteils weist dieses einen Querschnitt auf, der größer ist, als der Querschnitt der Kanalelemente, die durch den Kanalverbinder miteinander verbunden werden sollen. Die Hülle kann daher auch als weiblich (female) Hülle bezeichnet werden, in die die Enden der zu verbindenden Kanalelemente, die als männliche Elemente ausgestaltet sind, eingesteckt werden. Als Kanalelemente werden Bauteile bezeichnet, die einen Teil des Luftführungskanals bilden und sich insbesondere länglich erstrecken. Die Kanalelemente können beispielsweise gerade Kanalelemente oder gebogene Kanalelemente sein. Die Querschnittsform des Kanalverbinders entspricht der Querschnittsform der Kanalelemente, die über den Kanalverbinder verbunden werden sollen. Insbesondere können die Kanalelemente Elemente eines Flachkanals sein, die eine größere Breite als Höhe aufweisen.

Als Breite des Kanalverbinders und der Kanalelemente wird die Abmessung bezeichnet, die senkrecht zu der Längserstreckung des Luftführungskanals steht. Die Höhe steht ebenfalls senkrecht zu der Längserstreckung und steht zudem senkrecht zu der Breite. Als Länge des Kanalverbinders und der Kanalelemente wird deren Abmessung in der Längserstreckungsrichtung des Luftführungskanals bezeichnet.

Als Zusatzelement wird ein Element bezeichnet, das in oder an der Hülle vorgesehen ist und durch das zumindest eine Zusatzfunktion ausgeführt wird. Als Zusatzfunktion wird jede Funktion bezeichnet, die über das reine Aufnehmen von Enden der Kanalelemente hinausgeht. Die Zusatzfunktion kann beispielsweise die Befestigung des Luftführungskanals an anderen Komponenten, das Abdichten des Luftführungskanals oder die Erleichterung der Anbringung der Hülle an den Kanalelementen sein.

Indem an der Hülle zumindest ein Zusatzelement vorgesehen ist, wird somit die Montage der Dunstabzugsvorrichtung und insbesondere deren Anschluss an eine Luftauslassöffnung einer Dunstabzugsvorrichtung und Verbindung mit einem Auslass, wie beispielsweise einem Mauerkasten, vereinfacht.

Gemäß einer Ausführungsform stellt mindestens ein Zusatzelement einen Dichtring dar. Der mindestens eine Dichtring ist vorzugsweise in der Hülle integriert. Insbesondere ist der Dichtring in das Material der Wandung der Hülle integriert. Bei einer Hülle, die aus Kunststoff besteht, kann der Dichtring beispielsweise beim Herstellen, insbesondere Spritzgießen, der Hülle mit eingespritzt werden. Es liegt allerdings auch im Rahmen der Erfindung, dass der Dichtring an der Hülle befestigt ist. Das Integrieren des Dichtrings in die Hülle ist allerdings bevorzugt, da hierdurch ein fester Halt an der Hülle zuverlässig gewährleistet werden kann.

Durch das Vorsehen eines Dichtrings an der Hülle ist ein separates Abdichten des Übergangs von einem Kanalelement zum anderen nicht erforderlich. Bei der Ausführungsform von Verbindungen von Kanalelementen nach dem Stand der Technik weist jeweils ein Kanalelement ein Ende auf, dessen Querschnitt kleiner ist als der Querschnitt des anderen Kanalelementes. Diese Male-Female-Verbindung muss mit einem Dichtband, insbesondere einem Abdeckband, das auch als Masking-Tape bezeichnet wird, abgedichtet werden. Durch Vorsehen des Dichtrings, der an der Hülle oder in der Hülle integriert ist, kann dieser separate Montageschritt entfallen und dennoch eine zuverlässige Luftdichtigkeit des Luftführungskanals gewährleistet werden.

Gemäß einer Ausführungsform ragt der mindestens eine Dichtring zumindest nach innen über die Wandung der Hülle hinaus. Der Dichtring kann dabei an der Innenseite der Wandung der Hülle angebracht sein oder in dem Material der Wandung integriert sein und einen inneren Querschnitt aufweisen, der eine geringere Breite und Höhe aufweist, als die Breite und Höhe des innere Querschnitts der Hülle. Indem der Dichtring nach innen in die Hülle ragt, kann die Hülle als aufnehmendes, das heißt weibliches, Verbindungselement dienen. In einer bevorzugten Ausführungsform weist der Kanalverbinder an der Hülle mindestens zwei Dichtringe auf. Vorzugsweise sind beide Dichtringe so angeordnet und dimensioniert, dass diese nach innen über die Wandung der Hülle hinausragen. Bei dieser Ausführungsform ist jeder der Dichtringe in der Nähe des Endes der Hülle angeordnet.

Gemäß einer Ausführungsform ist mindestens ein Zusatzelement ein Anschlag an der Innenseite der Hülle. Als Anschlag wird ein Absatz oder Vorsprung bezeichnet, der sich über zumindest einen Teil des Umfangs der Innenseite der Hülle nach innen erstreckt. Der Anschlag kann beispielsweise durch eine Verjüngung gebildet werden. Hierdurch entstehen im Inneren der Hülle zwei Anschläge. Insbesondere dient ein Anschlag dabei als Positionierelement für ein Kanalelement, das in eine Seite der Hülle eingeführt wird, und der weitere durch die Verjüngung gebildete Anschlag dient als Positionierelement für ein weiteres Kanalelement, das in die andere Seite der Hülle eingeführt wird. Hierdurch kann eine korrekte Positionierung der Kanalelemente zueinander gewährleistet werden und insbesondere sichergestellt werden, dass beide Kanalelemente ausreichend weit in den Kanalverbinder eingeschoben wurden.

Gemäß einer Ausführungsform ist die Hülle zweiteilig ausgebildet. Bei dieser Ausführungsform besteht die Hülle insbesondere aus zwei offenen Teilprofilen. Die Teilungsebene liegt vorzugsweise in der Längsrichtung und Breitenrichtung der Hülle. Bei einer Hülle, die einen rechteckigen Querschnitt aufweist, weist daher jeder Teil der Hülle die Form eines U-Profils auf. Der Vorteil einer zweiteiligen Hülle besteht darin, dass diese auch in einem Zustand um die Enden von zwei Kanalelementen angeordnet werden kann, in dem die Enden der Kanalelement bereits nahe zueinander liegen und insbesondere in einem Abstand zueinander liegen, der geringer ist als die Länge der Hülle.

Bei dem zweiteiligen Aufbau der Hülle weist diese vorzugsweise zumindest einen Verschluss zum Verbinden der Hüllenteile, das heißt Schließen der Hülle, auf.

Gemäß einer Ausführungsform sind bei einer zweiteiligen Hülle die Hüllenteile gelenkig miteinander verbunden. Insbesondere sind die zwei Hüllenteile so miteinander gelenkig verbunden, dass ein Ende des offenen Profils, insbesondere U-Profils, eines Hüllenteils mit einem Ende des offenen Profils, insbesondere U-Profils, des anderen Hüllenteils über ein Gelenk oder Scharnier miteinander verbunden ist. Bei dieser Ausführungsform ist der Verschluss vorzugsweise an den Enden des jeweiligen offenen Profils angeordnet, die den Enden, die über das Gelenk miteinander verbunden sind, gegenüber liegen. Das Scharnier kann beispielsweise ein Filmscharnier darstellen.

Gemäß einer Ausführungsform wird der Verschluss durch einen Klettverschluss gebildet. Hierbei kann an einem der freien Enden des Hüllenteils eine Lasche aus Klettmaterial befestigt sein und über dieses Ende hinausragen. In der Nähe des freien Endes des weiteren Hüllenteils kann ein Streifen aus Klettmaterial oder rauem Material an der Außenseite der Wandung befestig sein.

Gemäß einer Ausführungsform stellt der Verschluss einen Rastmechanismus dar. Bei dieser Ausführungsform ist an einem freien Ende eines Hüllenteils beispielsweise ein Rastarm vorgesehen, der sich über das freie Ende hinaus erstreckt. An einem freien Ende des anderen Hüllenteils kann dann eine entsprechende Rastaufnahme vorgesehen sein, die mit dem Rastarm zusammenwirkt.

Über den Verschluss, der einen Klettverschluss oder einen Rastmechanismus darstellt, können Hüllenteile, die getrennt voneinander vorliegen, oder Hüllenteile, die an einem Ende gelenkig miteinander verbunden sind, miteinander verbunden werden und der Querschnitt der Hülle somit geschlossen werden.

Gemäß einer Ausführungsform stellt das Zusatzelement ein Führungselement dar. Das Führungselement ist vorzugsweise an der Außenseite der Hülle angeordnet. Als Führungselement wird ein Element bezeichnet, das zur Aufnahme zumindest eines Teils eines anderen Bauteils ausgelegt ist. Insbesondere kann das Führungselement eine Schiene sein. Das andere Bauteil, das zumindest bereichsweise aufgenommen werden kann, ist beispielsweise ein Träger oder eine Leiste. Der Träger oder die Leiste kann an dem Fußboden, der Decke oder in einem Möbelstück angeordnet sein, in dem das Kochfeld mit Dunstabzugsvorrichtung integriert ist. Somit kann der Luftführungskanal über die Führungselemente auf einfache Weise an dem Fußboden, der Decke oder dem Möbelstück befestig werden. Alternativ kann das Bauteil, das in das Führungselement teilweise aufgenommen wird, ein Kabel sein. Bei dieser Ausführungsform kann die Zusatzfunktion, die dem Kanalverbinder durch das Zusatzelement verliehen wird, die Kabelführung sein.

Das Führungselement kann beispielsweise ein Klemmelement darstellen. Diese Ausführungsform kann sowohl für die Befestigung des Kanalverbinders an der Decke, dem Fußboden oder einem Möbelstück oder für die Führung eines Kabels vorteilhaft sein, da ein Teil des jeweiligen Bauteils in das Klemmelement eingeführt und daher durch Klemmkraft gehalten werden kann.

Gemäß einem weiteren Aspekt betrifft die Erfindung einen Luftführungskanal, der zumindest zwei Kanalelemente aufweist. Der Luftführungskanal ist dadurch gekennzeichnet, dass der Luftführungskanal zumindest einen erfindungsgemäßen Kanalverbinder aufweist und zwei Kanalelemente über einen der Kanalverbinder verbunden sind.

Vorteile und Merkmale, die bezüglich des erfindungsgemäßen Kanalverbinders beschrieben werden, gelten - soweit anwendbar - auch für den erfindungsgemäßen Luftführungskanal und umgekehrt und werden gegebenenfalls nur einmalig beschrieben.

Der Luftführungskanal kann sich beispielsweise zwischen der Rückseite eines Kochfeldes mit integrierter Dunstabzugsvorrichtung zu einem Mauerkasten oder einem Durchlass zu einem Abluftkanal erstrecken, der hinter dem Kochfeld in einer Wand vorgesehen ist. Der Luftführungskanal kann aber auch für andere Dunstabzugsvorrichtungen verwendet werden, beispielsweise für Dunstabzugshauben, die oberhalb des Kochfeldes, beispielsweise an einer Raumwand oder Raumdecke montiert sind.

Vorzugsweise weisen die Kanalelemente zumindest an einem Ende eine Größe auf, die geringer ist, als die Größe der Innenseite, das heißt der Größe des freien Querschnittes des Kanalverbinders an dessen Enden. Dies bedeutet, dass die Kanalelemente als männliche Verbindungsteile und der Kanalverbinder als weibliche Verbindungsteile dienen. Die Kanalelemente können somit in den Kanalverbinder eingeführt und über diesen verbunden werden.

Die Erfindung wird im Folgenden erneut unter in Bezugnahme auf die beiliegenden Figuren genauer beschrieben. Es zeigen:
- Figur 1:: eine schematische Perspektivansicht einer ersten Ausführungsform eines erfindungsgemäßen Kanalverbinders;
- Figur 2:: eine schematische Perspektivansicht einer zweiten Ausführungsform eines erfindungsgemäßen Kanalverbinders;
- Figur 3:: eine schematische Perspektivansicht einer dritten Ausführungsform eines erfindungsgemäßen Kanalverbinders; und
- Figur 4:: eine schematische Schnittansicht einer Ausführungsform eines erfindungsgemäßen Luftführungskanals.

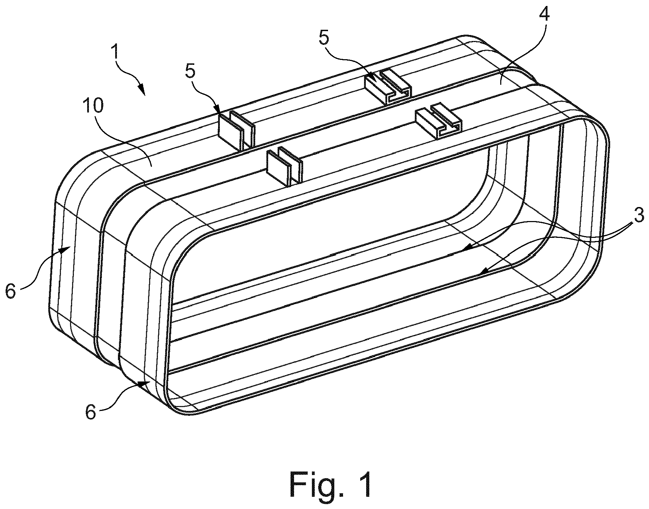

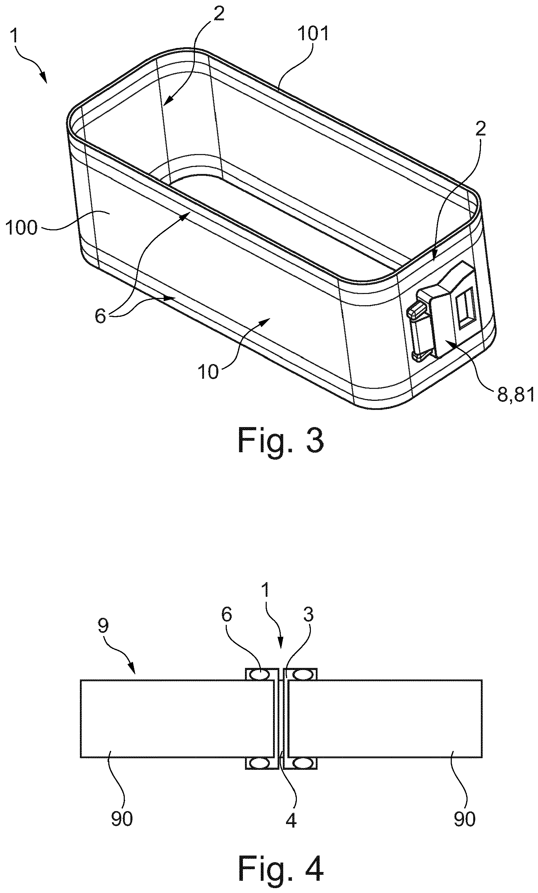

In Figur 4 ist eine schematische Schnittansicht einer Ausführungsform eines erfindungsgemäßen Luftführungskanals 9 gezeigt. In der gezeigten Ausführungsform besteht der Luftführungskanal 9 aus zwei Kanalelementen 90, die über einen Kanalverbinder 1 verbunden sind. Der Kanalverbinder 1 wird auch als Hülle bezeichnet und ist in der gezeigten Ausführungsform ein Kanalverbinder 1 gemäß der ersten Ausführungsform aus Figur 1, die später genauer erläutert wird.

Die Kanalelemente 90 weisen jeweils einen über die Länge des Kanalelementes 90 kontinuierlichen Querschnitt auf. In der gezeigten Ausführungsform stellt der Luftführungskanal 9 einen Flachkanal dar. In der gezeigten Schnittansicht ist zu erkennen, dass die Höhe der Kanalelemente 90 über deren Länge gleichbleibend ist. Zudem ist vorzugsweise auch die Breite der als Flachkanalelemente ausgestalteten Kanalelemente 90 über die Länge gleichbleibend. Das rechte Ende des linken Kanalelementes 90 der Figur 4 ist in eine Seite des Kanalverbinders 1 eingeführt und das linke Ende des rechten Kanalelementes 90 der Figur 4ist in die andere Seite, hier die rechte Seite des Kanalverbinders 1, eingeführt.

Wie sich aus Figur 1 ergibt, stellt der Kanalverbinder 1 in der ersten Ausführungsform eine Hülle dar, die durch eine Wandung 10 gebildet ist. Die Wandung 10 weist in der Mitte der Länge des Kanalverbinders 1 eine umlaufende Verjüngung 4 auf. Durch diese Verjüngung 4 wird in der Außenseite des Kanalverbinders 1 eine Vertiefung und an der Innenseite des Kanalverbinder 1 ein Absatz oder Vorsprung gebildet. Durch den Absatz oder Vorsprung werden im Inneren des Kanalverbinders 1 zwei Anschläge 3 gebildet. Insbesondere dienen die Anschläge 3 dazu, dass die Enden der Kanalelemente 90, die von den beiden Seiten des Kanalverbinders 1 in diesen eingeführt werden, an den Anschlägen 3 anliegen können und damit die Länge des Kanalelementes 90, die in den Kanalverbinder 1 eingeführt werden kann und soll, festgelegt ist. Der Querschnitt der Kanalelemente 90 weist daher bei dieser Ausführungsform des Kanalverbinders 1 eine Größe auf, die kleiner ist als der Querschnitt des Kanalverbinders 1 an dessen Enden und größer ist, als der innere Querschnitt des Kanalverbinders 1 im Bereich der Verjüngung 4. Vorzugsweise entspricht die Höhe der Anschläge 3, die durch die Verjüngung 4 gebildet werden, der Wandstärke der Kanalelemente 90. Hierdurch ist in dem Zustand, der in Figur 4 gezeigt ist, durch die Innenseite der Kanalelemente 90 und die Innenseite der Verjüngung eine durchgehende Fläche gebildet. Durch eine solche durchgehende Fläche können Verwirbelungen der Luft in dem Luftführungskanal 9 verhindert werden.

Wie sich weiterhin aus Figur 1 ergibt, weist der Kanalverbinder 1 zwei Dichtringe 6 auf. Jeder der Dichtringe 6 ist in der Nähe eines Endes des Kanalverbinders 1 vorgesehen. In der gezeigten Ausführungsform sind die Dichtringe 6 in die Wandung 10 des Kanalverbinders 1 eingegossen oder eingespritzt. Die Dichtringe 6 ragen hierbei über die Wandung 10 des Kanalverbinders 1 nach innen hinaus. Beim Einschieben des Kanalelementes 90 in den Kanalverbinder 1 gerät die Außenseite des Kanalelementes 90 mit der Innenseite der Dichtringe 6 in Kontakt. Durch die Reibung wird zum einen das Kanalelement 90 in dem Kanalverbinder 1 gehalten und zum anderen wird eine Luftdichtigkeit zwischen dem Kanalelement 90 und dem Kanalverbinder 1 gewährleistet.

In der Ausführungsform des Kanalverbinders 1 nach Figur 1 sind zusätzlich zu den Dichtringen 6 und der Vertiefung an der Oberseite der Wandung 10 des Kanalverbinders 1 Führungselemente 5 angeformt. Diese Führungselemente 5 sind vorzugsweise einteilig mit der Wandung 10 ausgebildet. In der gezeigten Ausführungsform sind zwei verschiedene Arten von Führungselementen 5 vorgesehen. Auf der linken Seite werden die Führungselemente 5 durch zwei parallel zueinander liegende Wände gebildet, die sich von der Oberseite des Kanalverbinders 10 aus nach oben erstrecken. Zwischen diesen Wänden kann beispielsweise ein Kabel (nicht gezeigt) geführt und gehalten werden. Hierzu können die Wände auch elastisch ausgebildet sein, wodurch das Kabel zwischen diesen Wänden geklemmt werden kann. Die Führungselemente 5 auf der rechten Seite in Figur 1 stellen eine flache Doppel-U-Schiene dar. In diese Doppelschiene kann ein flaches Bauteil beispielsweise ein Träger eingeführt werden.

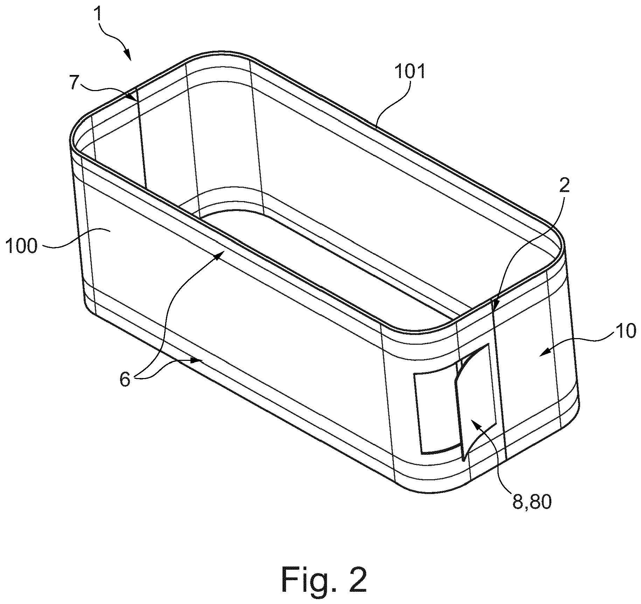

In Figur 2 ist eine zweite Ausführungsform des erfindungsgemäßen Kanalverbinders 1 gezeigt. In dieser zweiten Ausführungsform ist der Kanalverbinder 1 zweiteilig ausgestaltet. Der Kanalverbinder 1 besteht insbesondere aus zwei Hüllenteilen 100, 101. In der gezeigten Ausführungsform bildet jedes der Hüllenteile 100 die Hälfte des Kanalverbinders 1. Die Trennebene liegt hierbei in der Längsrichtung des Kanalverbinders 1. In der gezeigten Ausführungsform liegt die Trennebene in der Hälfte der geringeren Abmessung des Kanalverbinders 1, die auch als Höhe bezeichnet werden kann. Die Hüllenteile 100, 101 weisen daher jeweils ein U-Form auf, wobei die Enden der Schenkel der U-Form als freie Enden bezeichnet werden. Die Hüllenteile 100, 101 sind bei der zweiten Ausführungsform über ein Scharnier 7 miteinander verbunden. Das Scharnier 7 ist an einem der freien Enden des Hüllenteils 100 und einem der freien Enden des Hüllenteils 101 vorgesehen, das heißt verbindet diese.

An den anderen freien Enden der Hüllenteile 100, 101 ist jeweils ein Teil eines Verschlusses 8 vorgesehen. In der zweiten Ausführungsform ist der Verschluss 8 durch einen Klettverschluss 80 gebildet. Hierzu ist an dem freien Ende des Hüllenteils 101 eine Lasche aus Klettmaterial befestigt und erstreckt sich über das freie Ende des Hüllenteils 101 hinaus. An dem freien Ende des Hüllenteils 100 ist ein Streifen aus Klettmaterial oder einem rauen Material an der Außenseite des Kanalverbinders 1 befestigt. Durch die Lasche und den Streifen können die Hüllenteile 100, 101 nachdem diese über das Scharnier 7 aufeinander zugeschwenkt, das heißt zusammengeklappt, wurden, miteinander verbunden werden. Enden von Kanalelementen (in Figur 2 nicht gezeigt) können somit in dem Kanalverbinder 1 aufgenommen werden. Die Enden der Kanalelemente können dabei aneinander anliegen, bevor der Kanalverbinder 1 um die Enden gelegt und zusammengeklappt wird. Durch die Dichtringe 6, die in dem Kanalverbinder 1 auch in der zweiten Ausführungsform vorgesehen sind und die sich nach innen über die Wandung 10 erstrecken, werden die Kanalelemente in dem Kanalverbinder 1 gehalten und die Verbindung zwischen Kanalelementen und Kanalverbinder 1 wird abgedichtet.

In Figur 3 ist eine dritte Ausführungsform des Kanalverbinders 1 gezeigt. Die dritte Ausführungsform unterscheidet sich von der zweiten Ausführungsform dadurch, dass die Hüllentele 100, 101 nicht über ein Scharnier sondern über zwei Verschlüsse 8 miteinander verbunden sind. In der Figur ist nur ein Verschluss 8 sichtbar. Der Verschluss 8 besteht aus zwei Teilen, die in der Nähe der jeweiligen einander zugewandten freien Enden des Hüllenteils 100 und des Hüllenteils 101 an der Außenseite der Wandung 10 des Kanalverbinders 1 angeordnet sind. Der Verschluss 8 bildet in dieser Ausführungsform einen Rastmechanismus 81. Daher ist vorzugsweise an einem Hüllenteil 100 oder 101 ein Rastarm und an dem jeweils anderen Hüllenteil 101, 100 eine Rastaufnahme für den Rastarm vorgesehen, die miteinander wirken. Indem die Hüllenteile 101 und 100 über Verschlüsse, die Rastmechnismen 81 darstellen, miteinander verbunden sind, kann die Verbindung zwischen den Hüllenteilen 100, 101 durch ein Zusammenschieben der Hüllenteile 100, 101 erzeugt werden. Ein Verschwenken der Hüllenteile 100, 101 zueinander ist dabei nicht notwendig. Auch bei der dritten Ausführungsform sind Dichtringe 6 in dem Kanalverbinder 1 vorgesehen. Durch diese können Kanalelemente (in Figur 3 nicht gezeigt) nach dem Zusammenfügen der Hüllenteile 100, 101 in dem Kanalverbinder 1 gehalten werden und die Verbindung zwischen den Kanalelementen und dem Kanalverbinder 1 abgedichtet werden.

Um die Installation des Luftführungskanals effizienter und einfacher zu machen und eine gute Luftdichtigkeit zu gewährleisten, werden bei der Erfindung vorzugsweise alle Kanalelemente, das heißt gerade Kanalteile, Bogen- oder Eckteile und dergleichen so ausgeführt, dass diese in den Kanalverbinder eingeführt werden können. Die Kanalelemente werden somit mit einer männlichen Verbindung oder Male-Verbindung mit dem Kanalverbinder verbunden. Der Kanalverbinder stellt ein Female-Verbindungsteil dar. In dem Kanalverbinder ist vorzugsweise zudem ein Dichtungssystem, beispielsweise durch Dichtringe integriert.

Insbesondere bei einem zweiteiligen Kanalverbinder wird die Flexibilität bei der Installation des Luftführungskanals gesteigert. Insbesondere kann ein Scharnier verwendet wird oder der Kanalverbinder in zwei Teilen ausgebildet sein, die miteinander verrastet werden können. Hierdurch können spezifische Fälle der Montage adressiert werden und Zusammenbauprobleme gelöst werden.

Zudem kann die Erfindung auch verwendet werden, um den Luftführungskanal mit einem externen Lüfter zu verbinden. Manchmal steht hierbei nicht genug Platz zur Verfügung, um starre Kunststoffteile als Kanalverbinder einzuführen. Es ist daher ein Ansatz einen flexiblen Kanalverbinder zu verwenden, um die vollständige Installation auf einfache Weise zu erzielen. In diesem Fall kann der Kanalverbinder zweiteilig ausgestaltet sein und beispielsweise eine Öffnung und ein Scharnier umfassen. Um den Kanalverbinder zu schließen, kann ein selbsthaftendes Band, beispielsweise ein Klettband verwendet werden, das an dem Kanalverbinder integriert ist. Zudem kann, um Luftdichtigkeit zu gewährleisten, ein Dichtungssystem direkt in dem female Kanalverbinder integriert sein.

In einer Ausführungsform kann der Kanalverbinder aus zwei Teilen, die symmetrische Teile darstellen, gebildet sein. Um den Kanalverbinder zu schließen, wird ein Rastmechanismus, der auch als Klipssystem bezeichnet werden kann, an diesem integriert. Um zudem Luftdichtigkeit zu gewährleisten, ist auch bei dieser Ausführungsform ein Dichtsystem direkt an dem female Kanalverbinder integriert.

Die vorliegende Erfindung kann auch in speziellen Fällen der Montage verwendet werden, in denen nicht genug Flexibiltät der Teile des Luftführungskanals besteht, um das Ende des Luftführungskanals mit dem Lüfter der Dunstabzugsvorrichtung, die bereits in der Küche installiert ist, zu verbinden.

Die Erfindung weist eine Reihe von Vorteilen auf. Insbesondere ist der Luftführungskanal ein Plug-and-Play System, das einfach und schnell installiert und entfernt werden kann. Die Vermeidung der Verwendung von Masking Tape wird möglich und eine gute Luftdichtigkeit wird erzielt.

### Bezugszeichenliste

- 1: Kanalverbinder
- 10: Wandung
- 2: Trennung
- 3: Anschlag
- 4: Verjüngung
- 5: Führungselement
- 6: Dichtring
- 7: Scharnier
- 8: Verschluss
- 80: Klettband
- 81: Rastmechanismus
- 9: Luftführungskanal
- 90: Kanalelement

## Patentansprüche

1. Kanalverbinder zum Verbinden zweier Kanalelemente (90) eines Luftführungskanals (9), **dadurch gekennzeichnet, dass** der Kanalverbinder (1) eine Hülle darstellt, die zumindest ein Zusatzelement (3, 5, 6, 8) zum Ausführen einer Zusatzfunktion aufweist.

2. Kanalverbinder nach Anspruch 1, **dadurch gekennzeichnet, dass** mindestens ein Zusatzelement (3, 5, 6, 8) einen Dichtring (6) darstellt.

3. Kanalverbinder nach Anspruch 2, **dadurch gekennzeichnet, dass** der mindestens eine Dichtring (6) zumindest nach innen über die Wandung (10) der Hülle hinausragt.

4. Kanalverbinder nach einem der Ansprüche 1 bis 3, **dadurch gekennzeichnet, dass** mindestens ein Zusatzelement (3, 5, 6, 8) ein Anschlag (3) an der Innenseite der Hülle darstellt, der sich über zumindest einen Teil des Umfangs der Innenseite der Hülle erstreckt.

5. Kanalverbinder nach einem der Ansprüche 1 bis 4, **dadurch gekennzeichnet, dass** die Hülle zweiteilig ausgebildet ist und dass mindestens ein Zusatzelement (3, 5, 6, 8) zumindest einen Verschluss (8) zum Verbinden der Hüllenteile (100, 101) darstellt.

6. Kanalverbinder nach Anspruch 5, **dadurch gekennzeichnet, dass** die Hüllenteile (100, 101) gelenkig miteinander verbunden sind.

7. Kanalverbinder nach einem der Ansprüche 5 oder 6, **dadurch gekennzeichnet, dass** der Verschluss (8) einen Klettverschluss (80) darstellt.

8. Kanalverbinder nach einem der Ansprüche 5 bis 7, **dadurch gekennzeichnet, dass** der Verschluss (8) einen Rastmechanismus (81) darstellt.

9. Kanalverbinder nach einem der Ansprüche 1 bis 8, **dadurch gekennzeichnet, dass** das Zusatzelement (3, 5, 6, 8) ein Führungselement (5) an der Außenseite der Hülle darstellt.

10. Kanalverbinder nach Anspruch 9, **dadurch gekennzeichnet, dass** das Führungselement (5) ein Klemmelement darstellt.

11. Luftführungskanal, der zumindest zwei Kanalelemente (90) aufweist, **dadurch gekennzeichnet, dass** der Luftführungskanal (9) zumindest einen Kanalverbinder (1) nach einem der Ansprüche 1 bis 10 aufweist und zwei Kanalelemente (90) über einen der Kanalverbinder (1) verbunden sind.

12. Luftführungskanal nach Anspruch 11, **dadurch gekennzeichnet, dass** die Kanalelemente (1) zumindest an einem Ende eine Größe aufweisen, die geringer ist, als die Größe der Innenseite des Kanalverbinders (1) an dessen Enden.

13. Luftführungskanal nach einem der Ansprüche 11 oder 12, **dadurch gekennzeichnet, dass** der Luftführungskanal (9) an eine Dunstabzugsvorrichtung angeschlossen ist, die in einem Kochfeld integriert ist.
